## Europäisches Patentamt
## European Patent Office
## Office européen des brevets

(11) Numéro de publication: **0 184 262**
**B1**

(12) # FASCICULE DE BREVET EUROPÉEN

(45) Date de publication du fascicule du brevet:
**27.04.88**

(51) Int. Cl.⁴: **B 64 B 1/58**

(21) Numéro de dépôt: **85201975.1**

(22) Date de dépôt: **26.11.85**

(54) **Ballon aérostatique pilotable.**

(30) Priorité: **06.12.84 FR 8418798**

(43) Date de publication de la demande:
**11.06.86 Bulletin 86/24**

(45) Mention de la délivrance du brevet:
**27.04.88 Bulletin 88/17**

(84) Etats contractants désignés:
**BE CH DE FR GB IT LI LU NL**

(56) Documents cité:
**DE-A-239 989**
**GB-A-2 026 971**
**US-A-3 432 122**

(73) Titulaire: **CENTRE NATIONAL D'ETUDES SPATIALES (C.N.E.S.) Etablissement public, scientifique et, technique à caractère industriel et commercial 2, place Maurice- Quentin, F-75039 Paris Cédex 01 (FR)**

(72) Inventeur: **Regipa, Robert, 226, avenue Saint- Exupéry Bâtiment Provence, F-31400 Toulouse (FR)**

(74) Mandataire: **Barre, Philippe, Cabinet Barre- Gatti- Laforgue 95 rue des Amidonniers, F-31069 Toulouse Cédex (FR)**

LIBER, STOCKHOLM 1988

## Description

L'invention concerne un ballon aérostatique pilotable comprenant une première enveloppe, dite enveloppe externe et au moins une duexième enveloppe, dite enveloppe interne, disposée à l'intérieur de la première enveloppe et peut en particulier s'applique pour la réalisation de ballons de grands volumes qui peuvent être libres (dirigeables, ballons spatiaux..) ou captifs (ballons jouant le rôle de grues pour charger et décharger des matériels) (US-A-3 432 122).

On ne sait pas actuellement fabriquer des ballons de grands volumes, capables de résister à de fortes surpressions tout en présentant un poids modéré compatible avec leur utilisation pratique. Ainsi, les ballons dirigeables actuellement connus pour transporter des charges élevées possèdent des structures d'enveloppe qui ne peuvent, sous peine de détérioration, supporter des surpressions supérieures à 10 millibars environ (différence entre la pression intérieure et la pression externe). Dans ces conditions, les variations des masses gazeuses qui peuvent êtres produites pour ces ballons, sont très largement insuffisantes pour assurer leur pilotage aérostatique dans le sens vertical; celui-ci doit nécessairement être engendré par variation de masses solides ou liquides, ce qui entraîne plusieurs inconvénients bien connus (mauvaise maîtrise du pilotage dans le sens de la descente, obligation d'embarquer des charges supplémentaires, précautions à prendre pour les largages. En outre, l'équilibre aérostatique de tels ballons est très sensible aux variations thermiques et à la consommation de carburant et le pilotage de ces ballons est délicat.

Il existe, par ailleurs, des ballons spatiaux pilotables destinés à entraîner une charge en vue de l'exploration des couches atmosphériques; ces ballons qui sont également à faible surpression lorsqu'ils sont de grands volumes, comprennent généralement un ballon porteur gonflé d'un gaz plus léger que l'air tel que l'hélium, et un ballon stabilisateur gonflé d'air, lié au premier et situé au-dessous de celui-ci; le pilotage s'effectue en faisant varier la pression du ballon stabilisateur à volume constant par admission d'air dans celui-ci ou échappement d'air. Ces systèmes présentent des défauts qui sont liés au fait que les forces de pilotage sont uniquement développées par le ballon stabilisateur: les changements de niveaux sont lents à obtenir et difficiles à contrôler en altitude, et ces ballons sont instables à leur altitude de-plafond.

La présente invention se propose de pallier les defauts sus-évoqués des ballons aérostatiques pilotables connus.

Un objectif essentiel de l'invention est de fournir un ballon aérostatique dont le volume puisse être très élevé (jusqu à $10^6$ m$^3$) en vue d'être apte à transporter des charges importantes et dont la structure de rétention des gaz soit capable de supporter de très fortes surpressions (plusieurs centaines de millibars).

L'invention vise ainsi à fournir un ballon dont le pilotage aérostatique puisse être assuré par variation de masses gazeuses.

Un autre objectif de l'invention est d'accroître considérablement l'efficacité des manoeuvres de pilotage (dans le sens vertical) afin d'autoriser des changements de niveaux rapides et bien contrôlés, et ce, quelle que soit l'altitude.

Un autre objectif est d'obtenir une bonne stabilité du ballon quelle que soit son altitude et notamment au plafond.

En outre, un autre objectif de l'invention est de faciliter au sol les opérations de lancement des ballons.

Le ballon aérostatique pilotable conforme à invention est caractérisé en ce que l'enveloppe externe contient de l'air et possède une portion approximativement cylindrique et deux pôles, inférieur et supérieur, reliés par un lien interpolaire,

- un réseau de renforts longitudinaux s'étend longitudinalement le long de l'enveloppe externe et est rattaché au pôle inférieur et au pôle supérieur de celle-ci,

- un réseau de renforts circonférentiels s'étend transversalement autour de l'enveloppe externe,

- chaque enveloppe interne contient un gaz plus léger que l'air, ladite enveloppe interne étant apte à venir s'appuyer lors de son gonflage contre l'enveloppe externe et possédant deux pôles, inférieur et supérieur, fixés sur le lien interpolaire,

- et en ce qu'il comprend des moyens d'admission d'air dans l'enveloppe externe et des moyens d'évacuation d'air de celle-ci. (Il est à noter que par "air", on entend de façon générale le gaz formant l'atmosphère de la planète où évolue le ballon).

Ainsi, comme on le comprendra mieux plus loin, la structure d'un tel ballon le rend apte à supporter de fortes surpressions les tensions développées par la surpression sont en effet reprises dans une large proportion, soit par le réseau de renforts longitudinaux, soit par le réseau de renforts circonférentiels, soit par le lien interpolaire. Il est ainsi possible de prévoir des enveloppes minces de très faibles masses surfaciques, tout en soumettant le ballon à des surpression pouvant atteindre jusqu'à 500 ou 600 millibars. L'enveloppe externe peut en particulier être réalisée en un matériau d'épaisseur approximativement comprise entre 100 et 300 microns, chaque enveloppe interne pouvant être réalisée en un matériau plus mince encore, d'épaisseur approximativement comprise entre 10 et 100 microns.

De plus, dans un tel ballon où l'enveloppe interne contenant le gaz plus léger que l'air est intégrée à l'enveloppe contenant l'air, les forces de pilotage sont proportionnelles au volume total de l'enveloppe externe et bénéficient d'un effet multiplicateur par rapport aux systèmes classiques à deux ballons séparés.

De façon analogue, les forces réactionnelles s'appliquant sur le ballon en cas de variation d'altitude, sont proportionnelles au volume total de l'enveloppe externe et le ballon bénéficie d'une stabilité améliorée qui demeure bonne à l'altitude de plafond lorsque la quantité d'air est devenue très faible dans l'enveloppe externe.

En outre, dans un but de sécurité (compensation d'éventuelles fuites, possibilité de descente rapide), chaque enveloppe interne peut être associée à des moyens de gonflage à l'hélium ou à des moyens de dégonflage de celle-ci.

Le ballon conforme à l'invention peut comprendre une seule enveloppe interne disposée dans son enveloppe externe. Il peut également comprendre plusieurs enveloppes internes agencées à l'intérieur de l'enveloppe externe en fonction des exigences de l'application envisagée. Les moyens de gonflage et de dégonflage associés aux enveloppes internes peuvent, dans ce cas, comporter des moyens de transfert du gaz d'une enveloppe interne à une autre; ils peuvent également être adaptés pour conférer des pressions différentes aux diverses enveloppés internes.

Selon un mode de réalisation particulier, plusieurs enveloppes internes sont superposées à l'intérieur de l'enveloppe externe, le pôle inférieur de l'enveloppe interne du bas coïncidant sensiblement avec le pôle inférieur de l'enveloppe externe, cependant que le pôle supérieur de l'enveloppe interne du haut coïncide sensiblement avec le pôle supérieur de l'enveloppe externe et que les autres pôles desdites enveloppes internes sont fixés en positions intermédiaires sur le lien interpolaire.

Le ballon peut également comprendre plusieurs enveloppes internes disposées côte à côte de façon à venir au gonflage au contact entre elles et/ou au contact de l'enveloppe externe, les pôles inférieurs desdites enveloppes internes coïncidant sensiblement avec le pôle inférieur de l'enveloppe externe, cependant que leurs pôles supérieurs coïncident sensiblement avec le pôle supérieur de ladite enveloppe externe.

L'invention s'applique aussi bien dans le secteur des ballons spatiaux, notamment ballons stratosphériques, que dans celui des dirigeables (ballons munis de moyens de propulsion horizontale et éventuellement verticale) ou dans celui des ballons captifs (ballons liés à un câble et pilotés par télécommande pour le transfert de charges).

Le ballon conforme à l'invention constitue un module de base qui peut être associé à plusieurs autres modules analogues, soit en superposition verticale, soit en juxtaposition horizontale, soit encore en combinant ces agencements, en vue d'obtenir des ensembles aérostatiques de très grands volumes (dirigeables de grande capacité).

D'autres caractéristiques, buts et avantages de l'invention se dégageront de la description qui suit en référence aux dessins annexes qui, en présentent à titre d'exemples non limitatifs, des formes de réalisation; sur ces dessins qui font partie intégrante de la présente description:
- la figure 1 est une vue en perspective d'un ballon conforme à l'invention,
- la figure 2 en est une coupe par un plan axial vertical,
- la figure 3 en est une coupe de détail à échelle dilatée au niveau de l'enveloppe externe,
- les figures 4a, 4b et 4c sont des vues schématiques montrant entre deux renforts circonférentiels l'enveloppe externe dans des états de gonflage croissant,
- la figure 5 est une vue de détail en coupe montrant la pièce polaire inférieure du ballon,
- les figures 6a et 6b sont des vues schématiques illustrant la forme du ballon, respectivement dans un état de gonflage réduit (au décollage) et dans un état proche de la plénitude,
- la figure 7 est une vue schematique en coupe axiale verticale d'un autre mode de réalisation de ballon,
- la figure 8 est une coupe de détail d'une pièce interpolaire située entre deux enveloppes internes superposées dudit ballon,
- la figure 9 est une vue schématique en coupe axiale verticale d'un ensemble aérostatique réalisé au moyen de plusieurs ballons conformes à l'invention,
- la figure 10 est une coupe par un plan horizontal de cet ensemble.

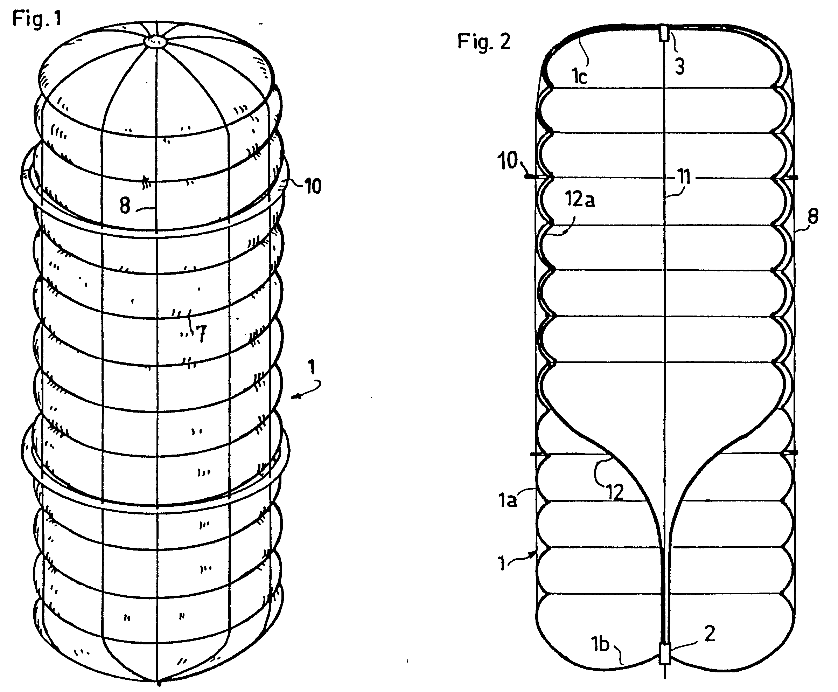

Le ballon aérostatique pilotable représenté à titre d'exemple aux figures 1 à 6 constitue le module de base le plus simple qui peut être utilisé seul ou en combinaison avec d'autres modules, pour réaliser un ballon spatial, un dirigeable, ou un ballon captif de transfert de charge.

Ce ballon comprend en premier lieu une enveloppe externe 1 qui est réalisée en assemblant des fuseaux rectangulaires, par tout moyen connu le long de leurs bords rectilignes. Cette enveloppe comporte ainsi une portion cylindrique 1a qui se prolonge par des portions extrêmes froncées dont les bords sont rattachés à des pièces polaires 2 et 3 disposées aux pôles, inférieur et supérieur, de l'enveloppe sur l'axe de celle-ci.

La fabrication d'une telle enveloppe possédant une portion cylindrique 1a peut être réalisée conformément au procédé décrit dans le brevet FR n° 2 472 971 au nom du demandeur.

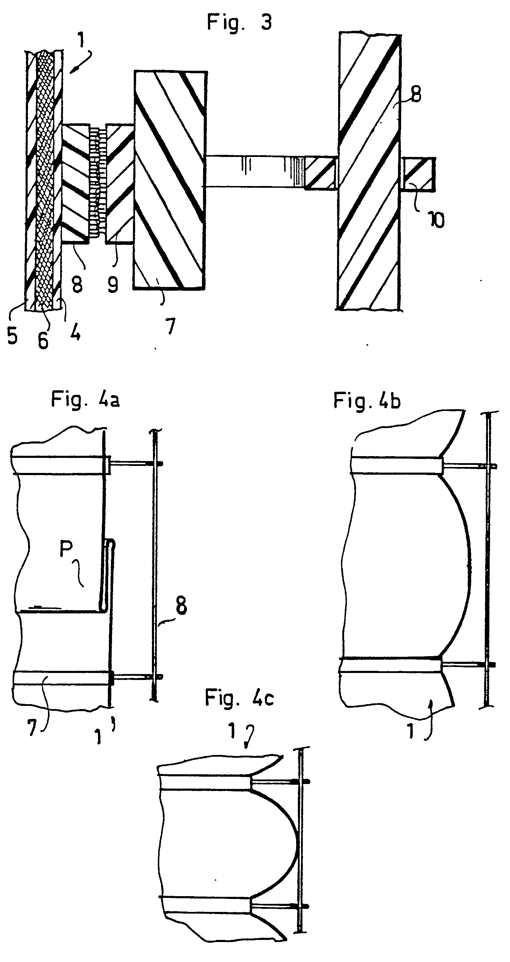

Le matériau constitutif de l'enveloppe externe 1 est un matériau composite étanche à l'air, possédant en l'exemple trois couches comme le représente la figure 3: du côté extérieur un film polyester thermoscellable 4, du côté intérieur un film polyéthylène soudable 5 et, entre les deux, un tissu "kevlar-polyester" 6. L'ensemble présente une épaisseur de l'ordre de 200 microns.

Le tissu 6 comprend une trame en polyester disposée dans le sens circonférentiel et une chaîne en "kevlar" disposée dans le sens longitudinal. Il possède ainsi une résistance dissymétrique, plus élevée dans le sens longitudinal que dans le sens circonférentiel; de plus, il est inextensible dans le sens longitudinal (par "inextensible" on entend un matériau dont l'allongement élastique ne dépasse pas 1 à 2 % environ), alors que, dans le sens circonférentiel, le matériau possède une élasticité plus importante (allongement de l'ordre de 10 % environ).

L'enveloppe externe 1 est entourée d'un réseau de renforts circonférentiels tels que 7 et d'un reseau de renforts longitudinaux tels que 8.

Les renforts circonférentiels 7 sont situés dans des plans perpendiculaires à l'axe de l'enveloppe, répartis sur la hauteur de celle-ci. Chaque renfort circonférentiel 7 est constitué par une bande en un matériau inextensible de haute résistance, par exemple "kevlar" de 5/10e mm d'épaisseur sur 20 à 50 mm de largeur; les deux extrémités de chaque bande sont assemblées par collage l'une sur l'autre.

Chaque bande 7 est liée en quelques points à l'enveloppe externe 1, de façon à pouvoir jouer par rapport à celle-ci en vue de ne lui transmettre que des efforts faibles par rapport à ceux supportés par ladite bande. En l'exemple, les fixations de chaque bande 7 sont réalisées au moyen de portions conjuguées 8 et 9 de matériaux d'accrochage du type "Velcro", qui sont collées en regard, d'une part, sur l'enveloppe externe 1, d'autre part sur la bande concernée 7.

Chaque bande de renfort 7 se trouve ainsi fixée autour et à l'extérieur de l'enveloppe externe 1 et, pour l'état gonflé de cette enveloppe, vient au contact de celle-ci sur toute sa périphérie sans lui transmettre de contraintes notables.

Par ailleurs, les renforts longitudinaux 8 sont situés dans des plans méridiens répartis autour de l'enveloppe externe; ils sont positionnés à l'extérieur du réseau de renforts circonférentiels, par des moyens de positionnement qui les maintiennent. En l'exemple, ces moyens de positionnement sont constitués par des ceintures souples 10 (en tissu ou autres) qui sont traversées par lesdits renforts longitudinaux.

Chaque renfort 8 est réalisé en un matériau inextensible de haute résistance et peut être constitué comme précédemment par des bandes de "kevlar".

Les renforts longitudinaux 8 s'étendent d'un seul tenant entre les pôles inférieur et supérieur de l'enveloppe externe et sont fixés au niveau de ces pôles sur les pièces polaires 2 et 3.

L'enveloppe externe 1 présente dans le sens longitudinal une longueur supérieure à la longueur de chaque bande de renfort longitudinal 8, de façon que, à l'état entièrement gonflé, les efforts longitudinaux soient essentiellement supportés par le réseau de renforts longitudinaux 8.

Comme le schématise la figure 4a, à l'état non totalement gonflé, l'enveloppe externe 1 possède des plis périphériques P situes entre les renforts circonférentiels. Ainsi lors du gonflage, des lobes apparaissent entre les renforts circonférentiels, et sont d'autant plus prononcés que la surpression dans l'enveloppe est plus grand (figures 4b et 4c).

Par ailleurs, les pièces polaires 2 et 3 sont réunies par un lien interpolaire 11 inextensible s'étendant le long de l'axe de l'enveloppe externe 1; en l'exemple, ce lien est constitué par un faisceau de bandes en un matériau inextensible de haute résistance, notamment "kevlar".

La longueur du lien interpolaire 11 est inférieure à celle des fuseaux formant l'enveloppe externe et est ajustée en fonction des divers paramètres du ballon pour obtenir la forme externe désirée (cf brevet FR n° 2 472 971 déjà évoqué).

De plus, le ballon comprend une enveloppe interne 12 qui est située à l'intérieur de l'enveloppe externe 1; cette enveloppe 12 est fabriquée d'une manière analogue à l'enveloppe externe par assemblage de fuseaux rectangulaires dont les bords supérieur et inférieur sont réunis et fixés sur les pièces polaires 2 et 3.

L'enveloppe interne 12 possède ainsi une portion cylindrique l2a et le diamètre de celle-ci est dimensionné pour correspondre à celui de la portion cylindrique 1a de l'enveloppe externe gonflée au maximum, de façon que cette portion 12a vienne s'appuyer au gonflage contre ladite portion 1a.

Ainsi, l'enveloppe interne n'a à supporter que de faibles contraintes et elle peut être réalisée en un matériau très mince d'épaisseur inférieure à celle de l'enveloppe externe, en particulier de l'ordre de 50 microns; ce matériau peut être un matériau composite du type comprenant une couche de "mylar" habillée d'un revêtement d'aluminium afin de la rendre étanche à l'hélium.

L'enveloppe interne est gonflée au moyen d'hélium (ou autre gaz plus léger que l'air), cependant que l'enveloppe externe est gonflée d'air.

Le gonflage à l'hélium peut s'effectuer uniquement au sol lors du lancement du ballon, la pièce polaire supérieure étant pourvue d'un clapet de sécurité pour permettre un échappement en cas de surpression intérieure supérieure à une limite.

Le ballon peut également être doté de moyens embarqués de gonflage et de dégonflage de l'enveloppe interne, en vue d'accroître la sécurité du vol (compensation de fuite, faculté d'augmenter l'efficacité du pilotage en cas de danger).

Dans tous les cas, le ballon est doté de moyens embarqués d'admission d'air dans l'enveloppe externe et de moyens d'évacuation d'air; ces moyens sont utilisés au sol pour le gonflage de ladite enveloppe et, en vol, pour son pilotage (une admission d'air engendrant une descente du ballon et une évacuation d'air engendrant une montée).

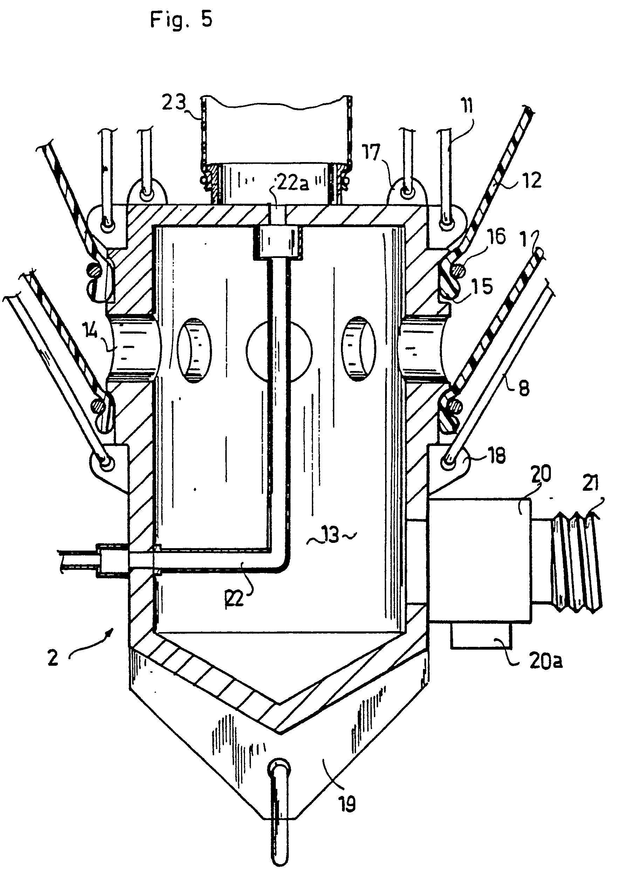

La figure 5 représente en coupe axiale la pièce polaire inférieure 2 par l'intermédiaire de laquelle s'effectue cette admission ou cette évacuation d'air.

Cette pièce forme une chambre interne 13 qui communique par des lumières 14 avec l'intérieur de l'enveloppe externe 1. A cet effet, la partie basse de cette enveloppe externe est fixée de façon étanche autour de ladite pièce au-dessous des lumières 14, cependant que la partie basse de l'enveloppe interne 12 est fixée de façon analogue au-dessus desdites lumières 14.

La fixation de chaque enveloppe 1 ou 12 s'effectue autour de la pièce 2 grâce à un bourrelet annulaire 15 solidaire du bord de l'enveloppe et à un collier de serrage 16.

En outre, la pièce polaire 2 comporte extérieurement des moyens d'accrochage tels que 17 du faisceau de bandes formant le lien interpolaire 11 et des moyens d'accrochage tels que 18 des bandes formant le réseau de renforts longitudinaux 8; elle porte également à sa partie basse un moyen d'accrochage 19 de la charge.

La pièce 2 est équipée d'une vanne trois voies 20, qui permet soit de réaliser une évacuation d'air par une sortie 20a, soit d'admettre de l'air comprimé provenant d'un turbocompresseur (ou autre moyen équivalent) à travers un conduit 21. Ce turbo-compresseur est embarqué et peut être logé avec la charge.

Le gonflage à l'hélium de l'enveloppe interne 12 s'effectue à travers un conduit 22 qui traverse de façon étanche la pièce 2 pour déboucher en partie haute de celle-ci par un orifice 22a situé sur l'axe du ballon. Pour éviter toute détérioration de l'enveloppe interne, un manchon poreux 23 est prévu à l'intérieur de celle-ci autour de l'orifice 22a; ce manchon s'étend d'un pôle à l'autre: lorsque le conduit 22 est connecté à une' source d'hélium de haute pression, ce manchon permet au gaz parvenant dans l'enveloppe interne de se détendre sans risquer de détériorer cette dernière. Bien entendu, un clapet referme le conduit 22 lorsqu'il est déconnecté de la source d'hélium.

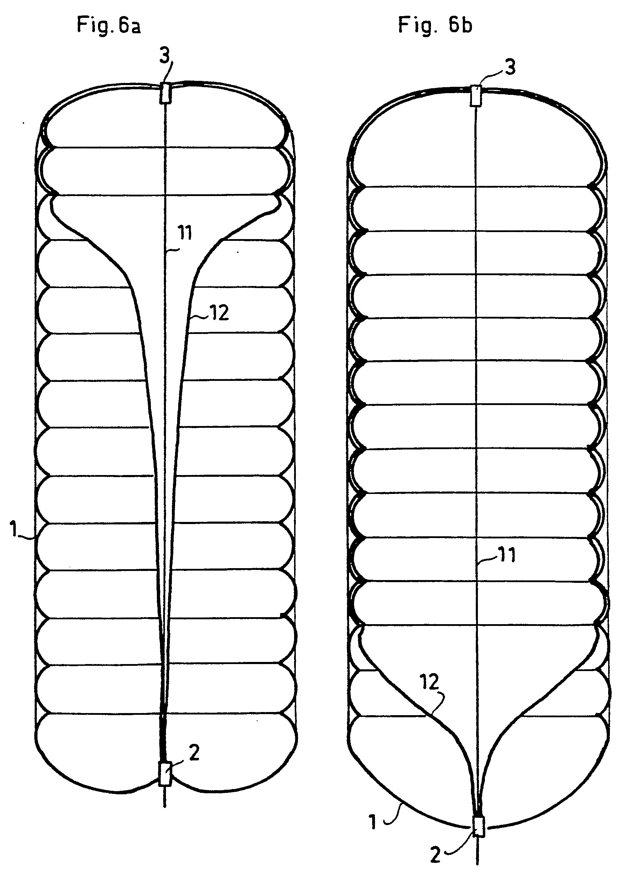

Les figures 6a et 6b montrent le ballon ci-dessus décrit dans deux états de gonflage différents.

Lorsque le ballon prend de l'altitude (pression extérieure décroissante), le volume de son enveloppe interne qui contient une quantité d'hélium constante, croît, cependant que la masse d'air de l'enveloppe externe diminue, le volume de l'ensemble du ballon demeurant sensiblement constant.

Dans un tel système, l'on peut démontrer qu'une admission d'air (ou une évacuation d'air) engendrant une augmentation $\Delta p$ (ou diminution), de la pression dans l'enveloppe externe produit une force verticale E dirigée vers le bas (ou vers le haut), telle que

$$|E| = g \cdot \rho a \cdot V \cdot \frac{\Delta p}{pa}$$
où $\rho a$ est la masse volumique de l'air,
V le volume total du ballon,
et pa la pression extérieure.

On observe que cette force de pilotage est proportionnelle à V: volume total du ballon, et non au seul volume d'air contenu dans l'enveloppe externe.

Au contraire, dans le cas de deux ballons séparés (ballon porteur gonflé d'hélium de volume $V'_1$ et ballon stabilisateur contenant de l'air de volume $V'_2$), cette force de pilotage E' est:

$$|E'| = g \cdot \rho a \, V'_2 \cdot \frac{\Delta p}{pa}.$$
En conséquence V étant très supérieur à $V'_2$, les forces de pilotage bénéficient dans le ballon de l'invention, d'un facteur de multiplication égal à $\frac{V}{V'_2}$.

De la même façon, les forces 2 de réaction s'opposant à une variation accidentelle d'altitude sont multipliées par ce facteur, de sorte que la stabilite du ballon est notablement améliorée, en particulier à l'altitude de plafond.

Par ailleurs, la structure du ballon permet de gonfler ses enveloppes à des surpressions considérablement plus élevées que celles que peuvent supporter les ballons classiques. En effet, les efforts de tension de l'enveloppe interne sont repris dans une large proportion par l'enveloppe externe et par le lien interpolaire, cependant que les efforts de tension de l'enveloppe externe sont repris par le lien interpolaire, le réseau longitudinal 8 et le réseau circonférentiel 7.

Il est à noter que la dissymétrie de résistance de l'enveloppe externe et sa structure lobée lorsqu'elle est gonflée, contribuent à accroître la valeur limite de la surpression admissible; en effet, l'expression de cette valeur limite comporte un terme proportionnel à $\frac{t_L}{r}$

où $t_L$ est la tension longitudinale de l'enveloppe externe à sa limite élastique,
et r le rayon des lobes.

Dans chaque application, les paramètres du ballon (densité du réseau circonférentiel, densité du réseau longitudinal,.. ) seront ajustés de façon à optimiser le champ de contraintes s'appliquant sur les enveloppes, de sorte que le matériau de celles-ci travaille dans les meilleures conditions, c'est-à-dire, dans chaque direction, à sa limite élastique multipliée par un coefficient de sécurité le meilleur compromis surpression/poids peut ainsi être obtenu.

Il est à noter que, en cas d'apparition locale de surtensions accidentelles, la structure précedemment décrite permet d'obtenir, au niveau du lobe concerné de l'enveloppe externe, un dépassement de la limite d'élasticité intervenant d'abord dans le sens circonférentiel, de sorte que l'éventuelle rupture prenne la forme d'une fente longitudinale limitée par les deux bandes de renforts circonférentiels qui bordent le lobe concerné. On évite ainsi un éclatement brusque du ballon.

Le lancement du ballon au sol est effectué en gonflant son enveloppe externe à l'air. Pendant ce gonflage, le ballon reste étendu sur le sol, cette position permettant de le maîtriser plus facilement que s'il était dressé verticalement (pendant cette phase, le ballon peut, le cas echéant, être disposé à l'abri dans un hangar de hauteur courante, ayant une forme allongée).

Ensuite, la quantité d'hélium nécessaire à la mission est admise dans l'enveloppe interne; le ballon se dresse progressivement jusqu'à son envol. Il est à noter que le ballon peut être aisément manipulé sans contact avec les enveloppes fragiles, en le saisissant par les bandes longitudinales 8 ou circonférentielles 7.

· Lors du décollage, l'enveloppe interne peut avoir un volume de l'ordre du tiers ou du quart du volume total du ballon, tandis qu'au plafond, elle occupe la quasi-totalité du volume de ce dernier, la quantité d'air résiduel dans l'enveloppe externe étant faible. La surpression intérieure relative régnant dans l'enveloppe externe et dans l'enveloppe interne peut être de l'ordre de 500 millibars.

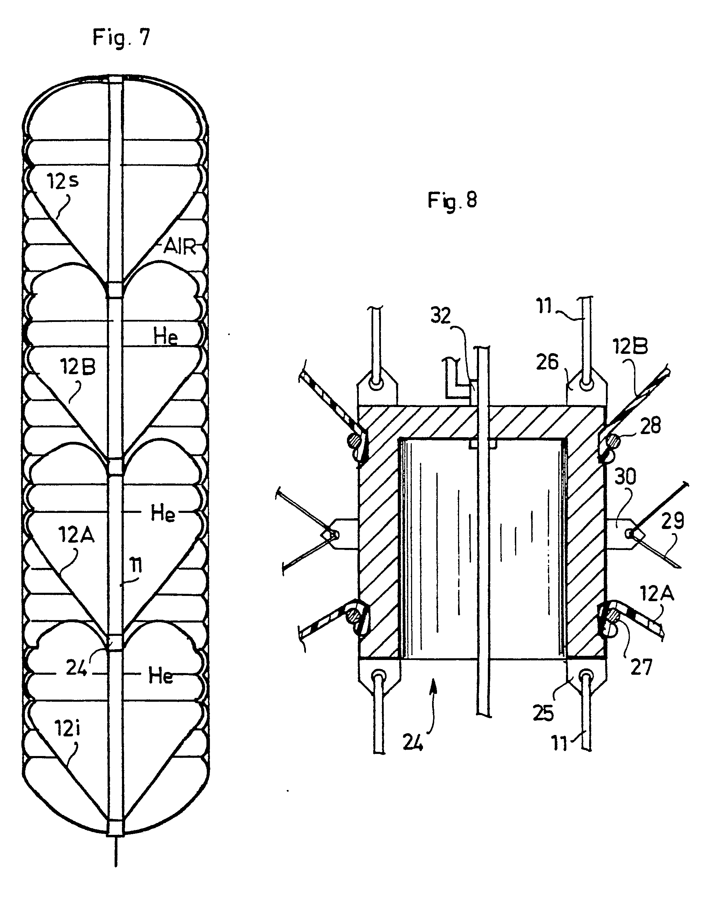

Les figures 7 et 8 visent une variante similaire à la précédente, mais possédant plusieurs enveloppes internes contenant de l'hélium (on a repris sur ces figures les mêmes références qu'aux figures précédentes pour des organes similaires). La base de l'enveloppe interne inférieure 12i est attachée à une pièce polaire analogue à la pièce polaire 2 précédemment décrite, cependant que la partie haute de l'enveloppe interne supérieure 12s est rattachée à une pièce polaire analogue à la pièce polaire 3.

Les autres pôles desdites enveloppes internes sont fixés en positions intermédiaires sur le lien interpolaire 11 au moyen d'une pièce polaire intermédiaire 24 dont un exemple de réalisation est représenté à la figure 8.

Cette pièce, en forme de coupelle renversée, comprend des moyens d'accrochage 25 des brins inférieurs du lien 11, des moyens d'accrochage 26 des brins supérieurs dudit lien et des moyens de fixation 27 et 28 des deux enveloppes internes concernées 12A et 12B; ces derniers moyens sont analogues à ceux de la pièce polaire déjà décrite.

De plus, dans ce cas, un réseau de renforts longitudinaux tel que 29 est de préférence associé à chaque enveloppe interne et vient s'accrocher sur des moyens 30 prévus à cet effet sur la pièce 24. Ce reseau supplémentaire constitué par des bandes de "kevlar" analogues à celles déjà décrites assure une reprise des tensions longitudinales qui s'appliquent sur les enveloppes internes, ces tensions longitudinales étant plus élévées, dans ce mode de réalisation, que dans le précédent.

En outre, le conduit d'hélium déjà décrit 22 se prolonge par un conduit souple 31 disposé selon l'axe du ballon et permettant de gonfler indépendamment chaque enveloppe interne à l'hélium grâce à des électrovannes 32 prévues au niveau de chacune de celles-ci.

Un tel mode de réalisation conditionne une sécurité accrue à l'égard des fuites d'hélium, du fait que le volume d'hélium est divisé en plusieurs volumes séparés (les fuites d'air de l'enveloppe externe étant moins importantes puisqu'elles peuvent être compensées par admission d'air).

Il est à noter que les enveloppes internes peuvent être constituées par des enveloppes séparées comme ci-dessus décrit; elles peuvent également être réalisées au moyen d'une gaine unique de hauteur adaptée, qui est serrée au niveau des pôles des enveloppes internes, au moyen de pièces polaires intermédiaires appropriées.

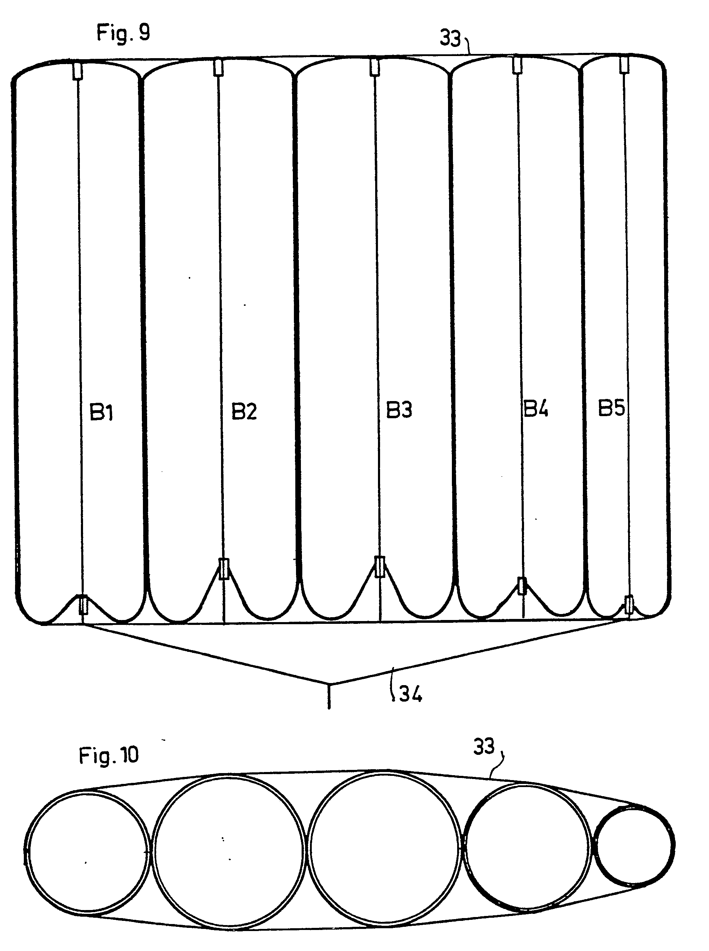

Les ballons décrits précédemment peuvent être combinés pour réaliser des ensembles aérostatiques adaptés à chaque application. Par exemple, on a représenté aux figures 9 et 10 la combinaison de cinq ballons $B_1$, $B_2$, $B_3$, $B_4$ et $B_5$ accolés les uns aux autres. Ces ballons de diamètre différent permettent de réaliser un ensemble de profil horizontal désiré. Un filet 33 retient ces ballons et assure la cohésion de l'ensemble; les liens interpolaires de chacun des ballons sont fixés sur un treillis de poutrelles symbolisé en 34, qui porte la charge.

On peut ainsi réaliser par combinaison de ballons conformes à l'invention des dirigeables aérostatiques qui seront équipés de groupes de propulsion horizontale et de tous les organes auxiliaires necessaires (dérive...). La stabilité purement aérostatique de ces engins leur permet de décoller et de demeurer stable en altitude sans vitesse relative; de plus leur pilotage dans le sens vertical peut être effectué par variation de la masse d'air qu'ils contiennent, les changements de niveaux étant faciles à contrôler et rapides à obtenir.

## Revendications

1. Ballon aérostatique pilotable, comprenant une première enveloppe externe (1) et au moins une deuxième enveloppe, dite enveloppe interne (12), disposée à l'intérieur de la première enveloppe (1), caractérisé en ce que:
- l'enveloppe externe (1), contient de l'air et possède une portion approximativement cylindrique (1a) et deux pôles, inférieur (2) et supérieur (3), reliés par un lien interpolaire (11),
- un réseau de renforts longitudinaux (8) s'étend longitudinalement le long de l'enveloppe externe (1) et est rattaché au pôle inférieur (2) et au pôle supérieur (3) de celle-ci,
- un réseau de renforts circonférentiels (7) s'étends transversalement autour de l'enveloppe externe,
- chaque enveloppe interne (12) contient un gaz plus léger que l'air, ladite enveloppe interne (12) étant apte à venir s'appuyer lors de son gonflage contre l'enveloppe externe (1) et possédant deux pôles, inférieur et supérieur, fixés sur le lien interpolaire (11),
- et en ce qu'il comprend des moyens d'admission d'air dans l'enveloppe externe et des moyens d'évacuation d'air de celle-ci (20, 21).

2. Ballon selon la revendication 1, caractérisé en ce que chaque enveloppe interne (12) possède une portion approximativement cylindrique (12a), apte à venir s'appuyer au gonflage contre la portion cylindrique (1a) de l'enveloppe externe.

3. Ballon selon l'une des revendications 1 ou 2, caractérisé en ce que les renforts circonférentiels (7) sont fixés sur l'enveloppe externe (1) à l'extérieur de celle-ci de façon que, pour l'état gonflé de cette enveloppe, chaque renfort (7) se trouve au contact de celle-ci sur toute sa périphérie, et en ce que les renforts longitudinaux (8) sont répartis dans des plans méridiens autour de l'enveloppe externe, à l'extérieur du réseau de renforts circonférentiels.

4. Ballon selon la revendication 3, caractérisé ce que le réseau longitudinal (8) et le réseau circonférentiel (7) sont constitué par des bandes en un matériau inextensible de haute résistance, chaque bande du réseau longitudinal (8) étant maintenue par des moyens de positionnement, cependant que chaque bande du réseau circonférentiel (7) est liée à l'enveloppe externe de façon à pouvoir jouer par rapport à celle-ci en vue de ne lui transmettre que des efforts faibles par rapport à ceux supportés par ladite bande (10).

5. Ballon selon la revendication 4, caractérisé en ce que l'enveloppe externe (1) présente dans le sens longitudinal une longueur supérieure à la longueur de chaque bande de renfort longitudinal (8) de façon que, à l'état entièrement gonflé, les efforts longitudinaux soient essentiellement supportés par le réseau de renforts longitudinaux.

6. Ballon selon la revendication 5, caractérisé en ce que, à l'état non totalement gonflé, l'enveloppe externe (1) présente des plis périphériques situes entre les renforts circonférentiels (7).

7. Ballon selon l'une des revendications 1, 2, 3, 4, 5 ou 6, caractérisé en ce que l'enveloppe externe (1) est réalisée au moyen d'un matériau (4, 5, 6) à résistance dissymétrique, plus élevée dans le sens longitudinal que dans le sens circonférentiel.

8. Ballon selon l'une des revendications 1, 2, 3, 4, 5, 6 ou 7, caractérisé en ce qu'il comprend des moyens de gonflage et de dégonflage (22, 31, 32) de chaque enveloppe interne (12) au moyen du gaz plus léger que l'air.

9. Ballon selon l'une des revendications 1, 2, 3, 4, 5, 6, 7 ou 8, caractérisé en ce que l'enveloppe externe (1) est réalisée en un matériau d'épaisseur approximativement comprise entre 100 et 300 microns, chaque enveloppe interne (12) étant réalisée en un matériau plus mince, d'épaisseur approximativement comprise entre 10 et 150 microns.

10. Ballon selon la revendication 2, caractérisé en ce qu'il comprend une enveloppe interne unique (12) ou plusieurs enveloppes internes superposées (12i, 12s, 12A, 12B...), le diamètre de la portion cylindrique (12a) de chaque enveloppe interne correspondant à celui (1a) de l'enveloppe externe (1) gonflée au maximum, de façon à permettre un appui de la ou desdites enveloppes internes contre l'enveloppe externe.

11. Ballon selon l'une des revendications 1, 2, 3, 4, 5, 6, 7, 8, 9 ou 10, caractérisé en ce que le lien interpolaire (11) est constitué par un faisceau de bandes en un matériau inextensible de haute résistance, lesdites bandes étant fixées sur des pièces polaires (2, 3) disposées aux pôles de l'enveloppe externe.

12. Ballon selon l'une des revendications 1 à 11, caractérisé en ce qu il comprend plusieurs enveloppes internes (12i, 12s, 12A, 12B) superposées à l'intérieur de l'enveloppe externe (1), le pôle inférieur de l'enveloppe interne du bas (12i) coïncidant sensiblement avec le pôle inférieur de l'enveloppe externe, cependant que le pôle supérieur de l'enveloppe interne du haut (12s) coïncide sensiblement avec le pôle supérieur de l'enveloppe externe et que les autres pôles desdites enveloppes internes (24) sont fixés en positions intermédiaires sur le lien interpolaire (11).

13. Ballon selon l'une des revendications 1 à 11, caractérisé en ce qu il comprend plusieurs enveloppes internes disposées côte à côte de façon à venir au gonflage au contact entre elles et/ou au contact de l'enveloppe externe, les pôles inférieurs desdites enveloppes internes coïncidant sensiblement avec le pôle inférieur de l'enveloppe externe, cependant que leurs pôles supérieurs coïncident sensiblement avec le pôle supérieur de ladite enveloppe externe.

**Patentansprüche**

1. Steuerbarer aerostatischer Ballon, der eine erste Hülle, die sogenannte Außenhülle (1), und mindestens eine zweite innerhalb der ersten Hülle (1) angeordnete Hülle, die sogenannte Innenhülle (12), umfaßt, dadurch gekennzeichnet, daß

- die Außenhülle (1) Luft enthält und einen annähernd zylindrischen Teil (1a) besitzt, sowie zwei Pole, einen unteren (2) und einen oberen (3), die durch eine zwischenpolare Verbindungseinheit (11) miteinander verbunden sind,
- ein Netzwerk von Längsverstärkungselementen (8) sich der Länge nach entlang der Außenhülle (1) erstreckt und an dem unteren Pol (2) sowie dem oberen Pol (3) der letzteren angebracht ist,
- ein Netzwerk von Umfangsverstärkungselementen (7) sich in Querrichtung um die Außenhülle erstreckt,
- jede Innenhüllle (12) ein Gas enthält, das leichter ist als die Luft, wobei die besagte Innenhülle (12) in der Lage ist, sich während des Aufblasens an der Außenhülle (1) abzustützen und zwei an der zwischenpolaren Verbindungseinheit (11) angebrachte Pole, einen unteren und einen oberen besitzt,
- und das er Mittel zum Einlassen von Luft in die Außenhülle sowie Mittel zum Ablassen von Luft aus dieser (20, 21) umfaßt.

2. Ballon im Einklang mit Anspruch 1, dadurch gekennzeichnet, daß Jede Innenhülle (12) einen annähernd zylindrischen Teil (12a) besitzt, der in der Lage ist, sich während des Aufblasens an dem zylindrischen Teil (1a) der Außenhülle abzustützen.

3. Ballon im Einklang mit einem der Ansprüche 1 oder 2, dadurch gekennzeichnet, daß die Umfangsverstärkungselemente (7) so an der Außenseite der Außenhülle (1) angebracht sind, daß sich im aufgeblasenen Zustand dieser Hülle jedes Verstärkungselement (7) mit dieser entlang ihrens ganzen Umfangs in Kontakt befindet, sowie dadurch das die Längsverstärkungselemente (8) in Meridianebenen rings um die Außenhülle angeordnet sind, und zwar außerhalb des Netzwerks der Umfangsverstärkungselemente.

4. Ballon im Einklang mit Anspruch 3, dadurch gekennzeichnet, daß das Löngsnetzwerk (8) und das Umfangsnetzwerk (7) aus Bändern aus einem nicht dehnbaren Werkstoff hoher Widerstandsfähigkeit bestehen, wobei Jedes Band des Längsnetzwerks (8) durch Feststellmittel in Position gehalten wird, während jedes Band des Umfangsnetzwerks (7) mit der Außenhülle so verbunden ist, daß es sich in bezug auf diese so verhalten kann, daß es auf diese Kräfte überträgt, die im Verhältnis zu denen, denen das besagte Band (10) ausgesetzt ist, nur schwach sind.

5. Ballon im Einklang mit Anspruch 4, dadurch gekennzeichnet, das die Länge der Außenhülle (1) in Längsrichtung größer ist als die Länge jedes Bandes des Längsnetzwerks (8), so das im völlig aufgeblasenen Zustand die Längskräfte im wesentlichen durch das Netzwerk von Längsverstärkungselementen aufgenommen werden.

6. Ballon im Einklang mit Anspruch 5, dadurch gekennzeichnet, das im nicht völlig aufgeblasenen Zustand die Außenhülle (1) Umfangsfalten aufweist, die sich zwischen den Umfangsverstärkungselementen (7) befinden.

7. Ballon im Einklang mit einem der Ansprüche 1, 2, 3, 4, 5 oder 6, dadurch gekennzeichnet, das die Außenhülle (1) mit Hilfe eines Werkstoffes (4, 5, 6) mit asymmetrischem Widerstand gefertigt wird, wobei der besagte Widerstand in der Längsrichtung größer ist als in der Umfangsrichtung.

8. Ballon im Einklang mit einem der Ansprüche 1, 2, 3, 4, 5, 6 oder 7, dadurch gekennzeichnet, daß er Mittel zum Aufblasen mit einem Gas, das leichter ist als die Luft sowie zum Ablassen des besagten Gases (22, 31, 32) jeder Innenhülle (12) umfaßt.

9. Ballon im Einklang mit einem der Ansprüche 1, 2, 3, 4, 5, 6, 7 oder 8, dadurch gekennzeichnet, daß die Außenhülle (1) aus einem Werkstoff mit einer Dicke von annähernd zwischen 100 und 300 Mikron gefertigt wird, wobei jede Innenhülle (12) aus einem dünneren Werkstoff besteht, dessen Dicke annähernd zwischen 10 und 150 Mikron beträgt.

10. Ballon im Einklang mit Anspruch 2, dadurch gekennzeichnet, das er eine einzige Innenhülle (12) oder mehrere übereinander befindliche Innenhüllen (12i, 12s, 12A, 12B...) umfaßt, wobei der Durchmesser des zylindrischen Teils (12a) jeder Innenhülle dem Durchmesser (1a) der Außenhülle (1) im maximal aufgeblasenen Zustand entspricht, so daß sich die besagte Innenhülle bzw. die besagten Innenhüllen an der Außenhülle abstützen kann bzw. können.

11. Ballon im Einklang mit einem der Ansprüche 1, 2, 3, 4, 5, 6, 7, 8, 9 oder 10, dadurch gekennzeichnet, daß die zwischenpolare Verbindungseinheit (11) aus einem Bündel von Bändern aus einem nicht dehnbaren Werkstoff hoher Widerstandsfähigkeit besteht, wobei die besagten Bänder an Polstücken (2, 3) an den Polen der Außenhülle angebracht sind.

12. Ballon im Einklang mit einem der Ansprüche 1 bis 11, dadurch gekennzeichnet, daß er mehrere Innenhüllen (12i, 12s, 12A, 12B) umfaßt, die im Inneren der Außenhülle (1) übereinander gelagert sind, wobei der untere Pol der unteren Innenhülle (12i) im wesentlichen mit dem unteren Pol der Außenhülle zusammenfällt, während der obere Pol der oberen Innenhülle (12s) im wesentlichen mit dem oberen Pol der Außenhülle zusammenfällt und die anderen Pole der besagten Innenhüllen (24) in Zwischenlagen an der zwischenpolaren Verbindungseinheit (11) angebracht sind.

13. Ballon im Einklang mit einem der Ansprüche 1 bis 11, dadurch gekennzeichnet, daß er mehrere Innenhüllen umfaßt, die nebeneinander so angeordnet sind, daß sie beim Aufblasen miteinander und/oder mit der Außenhülle in Kontakt kommen, wobei die Innenpole der besagten Innenhüllen im wesentlichen mit dem unteren Pol der Außenhülle zusammenfallen, während die oberen Pole im wesentlichen mit dem oberen Pol der besagten Außenhülle zusammenfallen.

## Claims

1. Steerable aerostatic balloon comprising a first envelope, the so-called outer envelope (1), and at least one second envelope, the so-called inner envelope (12), arranged within the first envelope (1), characterised in that

- the outer envelope (1) contains air and has an approximately cylindrical part (1a) and two poles, a lower one (2) and an upper one (3), joined by an interpolar connecting device (11),

- a network of longitudinal reinforcing elements (8) extends longitudinally along the outer envelope (1) and is joined to the lower pole (2) and to the upper pole (3) of the latter,

- a network of circumferential reinforcing elements (7) extends transversely about the outer envelope,

- each inner envelope (12) contains a gas lighter than air, said inner envelope (12) being capable of resting, while it is inflated, against the outer envelope (1) and having two poles, a lower one and an upper one, attached to the interpolar connecting device (11),

- and in that it comprises means for the admission of air into the outer envelope and means for evacuating air from the latter (20, 21).

2. Balloon according to claim 1, characterrised in that each internal envelope (12) has an approximately cylindrical part (12a), capable of resting, during the course of inflation, against the cylindrical part (1a) of the outer envelope.

3. Balloon according to one of claims 1 or 2, characterised in that the circumferential reinforcing elements (7) are attached to the outer envelope (1) at the outside of the latter in such a manner that, in the inflated state of said envelope, each reinforcing element (7) is in contact with the latter along its entire periphery and in that the longitudinal reinforcing elements (8) are distributed in meridian planes about the outer envelope, outside the network of circumferential reinforcing elements.

4. Balloon according to claim 3, characterised in that the longitudinal network (8) and the circumferential network (7) consist of bands made of non-extensible high-resistance material, each band of the longitudinal network (8) being maintained by locating means whereas each band of the circumferential network (7) is connected to the outer envelope in such a manner as to be capable of acting in relation to the latter in such a way as to transmit to it only light stresses by comparison with those which said band (10) is subject to.

5. Balloon according to claim 4, characterised in that the outer envelope (1) has in the longitudinal direction a greater length than the length of each longitudinal reinforcing band (8) so that in the fully inflated state the longitudinal stresses are substantially borne by the network of longitudinal reinforcing elements.

6. Balloon according to claim 5, characterised in that, in the not fully inflated state, the outer envelope (1) has peripheral folds located between the circumferential reinforcing elements (7).

7. Balloon according to one of claims 1, 2, 3, 4, 5 or 6, characterised in that the outer envelope (1) is made with the aid of a material (4, 5, 6) of asymmetric resistance, which is higher in the longitudinal direction than in the circumferential direction.

8. Balloon according to one of claims 1, 2, 3, 4, 5, 6 or 7, characterised in that it comprises means for inflating and deflating (22, 31, 32) of each inner envelope (12) by means of a gas lighter than air.

9. Balloon according to one of claims 1, 2, 3, 4, 5, 6, 7 or 8, characterised in that the outer envelope (1) is made of a material having a thickness approximately between 100 and 300 microns, each inner envelope (12) being made of a thinner material, with a thickness approximately between 10 and 150 microns.

10. Balloon according to claim 2, characterised in that it comprises a single inner envelope (12) or several inner envelopes one above the other (12i, 12s, 12A, 12B...), the diameter of the cylindrical part (12a) of each inner envelope corresponding to that (1a) of the outer envelope (1) when it is fully inflated, so as to permit said inner envelope or envelopes to rest against the outer envelope.

11. Balloon according to one of claims 1, 2, 3, 4, 5, 6, 7, 8, 9 or 10, characterised in that the interpolar connecting device (11) consists in a bundle of bands made of a non-extensible high-resistance material, said bands being attached to polar piece, (2, 3) arranged at the poles of the outer envelope.

12. Balloon according to one of claims 1 to 11, characterised in that it comprises several inner envelopes (12i, 12s, 12A, 12B) one above the other within the outer envelope (1), the lower pole of the lowest inner envelope (12i) substantially coinciding with the lower pole of the outer envelope, whereas the upper pole of the uppermost inner envelope (12s) substantially coincides with the upper pole of the outer envelope and in that the other poles of said inner envelopes (24) are attached in intermediary positions to the interpolar connecting device (11).

13. Balloon according to one of claims 1 to 11, characterised in that it comprises several inner envelopes arranged side by side in such a manner as to contact one another during inflation and/or to contact the outer envelope, the lower poles of said inner envelopes coinciding substantially with the lower pole of the outer envelope whereas their upper poles coincide substantially with the upper pole of said outer envelope.

Fig. 1

Fig. 2

0 184 262

Fig. 3

Fig. 4a

Fig. 4b

Fig. 4c

Fig. 5

Fig. 6a

Fig. 6b

Fig. 7

Fig. 8

Fig. 9

33

B1  B2  B3  B4  B5

34

Fig. 10

33